# EUROPÄISCHE PATENTSCHRIFT

(11) **EP 2 349 831 B1**
(45) Veröffentlichungstag und Bekanntmachung des Hinweises auf die Patenterteilung: **10.04.2013**
(21) Anmeldenummer: 09782475.9
(22) Anmeldetag: 01.09.2009
(51) Int. Cl.: B64C 11/38

(54) **ANORDNUNG ZUM VERSTELLEN EINES FLUGZEUGPROPELLERS**
ARRANGEMENT FOR ADJUSTING AN AIRCRAFT PROPELLER
DISPOSITIF DE RÉGLAGE D'UNE HÉLICE D'AVION

(30) Priorität: 07.11.2008 DE 102008043587
(43) Veröffentlichungstag der Anmeldung: 03.08.2011
(73) Patentinhaber: Thielert Aircraft Engines Gmbh Vertr. D. D. Insolvenzverwalter Dr. Bruno M. Kübler, 09350 Lichtenstein (DE)
(72) Erfinder: BÖHM, Matthias, 09385 Erlbach-Kirchberg (DE)
(74) Vertreter: Specht, Volker
(86) Internationale Anmeldenummer: PCT/EP2009/061298
(87) Internationale Veröffentlichungsnummer: WO 2010/052042

(56) Entgegenhaltungen:
- DE-B- 1 142 280
- FR-A- 1 036 542
- GB-A- 629 540
- US-A- 2 204 639
- US-A- 2 557 334
- US-A- 2 661 806
- US-A- 2 927 648
- US-A- 3 115 937
- US-A- 5 364 231

## Beschreibung

Die Erfindung betrifft eine Anordnung zum hydraulischen Verstellen der Propellerblätter eines Flugzeugpropellers mit einem über ein Druckbegrenzungsventil an eine Hydraulikpumpe angeschlossenen Hydraulikzylinder.

In der Luftfahrt werden bekanntermaßen Propeller mit einstellbaren Propellerblättern (Verstellpropeller) eingesetzt, deren Anstellwinkel auf diese Weise an verschiedene Betriebssituationen, insbesondere beim Start und bei der Landung und beim Rangieren auf dem Flugfeld, angepasst werden kann. Bei einer bekannten Anordnung zum Verstellen der Propellerblätter stehen diese über einen Stellmechanismus mit dem in einem Hydraulikzylinder durch die Energie einer Hydraulikflüssigkeit betätigten Kolbens in Verbindung. Die Hydraulikflüssigkeit wird mit konstantem Volumen und einem bestimmten Druck über eine Druckleitung von einer saugseitig an ein Hydraulikflüssigkeitsreservoir, beispielsweise einen Ölbehälter oder das Getriebegehäuse, angeschlossenen Hydraulikpumpe bereitgestellt. In die Druckleitung sind ein Druckbegrenzungsventil und eine Propeller-Regelhydraulik eingebunden. Das Druckbegrenzungsventil begrenzt den Druck auf einen konstanten maximalen Solldruck, indem das Druckbegrenzungsventil beim Überschreiten des Solldrucks solange öffnet und von der Hydraulikpumpe zugeführte überschüssige Hydraulikflüssigkeit über eine Rücklaufleitung in den Ölbehälter zurückführt bis der Solldruck unterschritten ist. Im praktischen Betrieb besteht somit ein ständiger Hydraulikflüssigkeitskreislauf vom Ölbehälter über die Saugleitung, die Hydraulikpumpe, die Druckleitung, das Druckbegrenzungsventil und die lange Rücklaufleitung zurück zum Ölbehälter. Infolge des ständigen Ölkreislaufs über eine lange Wegstrecke ergeben sich Strömungsverluste und eine damit verbundene Erwärmung des Öls und letztlich eine Verminderung des Wirkungsgrades des gesamten hydraulischen Systems.

Ein wesentlicher Stand der Technik ist durch US 3,115,957 gegeben.

Der Erfindung liegt die Aufgabe zugrunde, die eingangs erwähnte Anordnung zur hydraulischen Verstellung der Propellerblätter eines Flugzeugpropellers so weiterzuentwickeln, dass der Wirkungsgrad des hydraulischen Systems verbessert wird.

Erfindungsgemäß wird die Aufgabe mit einer gemäß den Merkmalen des Patentanspruchs 1 ausgebildeten Anordnung zur hydraulischen Verstellung der Propellerblätter gelöst. Zweckmäßige Ausgestaltungen der Erfindung sind Gegenstand der Unteransprüche.

Der Grundgedanke der Erfindung besteht mit anderen Worten in der Rückführung des zur Einstellung eines am Hydraulikzylinder wirkenden gleichbleibenden Druckes am Druckbegrenzungsventil abgezweigten Ölvolumens auf kürzestem Weg in den Hydraulikölkreislauf, indem das Druckbegrenzungsventil parallel zur Hydraulikpumpe angeordnet ist und unmittelbar an deren Druckanschluss und deren Sauganschluss angeschlossen ist. Dadurch werden die Erwärmung und Verschäumung des Hydrauliköls minimiert und die Pumpverluste verringert, so dass letztlich ein verbesserter Wirkungsgrad des hydraulischen Systems erzielt werden kann.

Zudem werden das Druckbegrenzungsventil und die entsprechenden Anschlussleitungen zum Druck- und zum Sauganschluss der Hydraulikpumpe in das Pumpengehäuse integriert, so dass das zur Sollwerteinstellung abgezweigte Öl tatsächlich den kürzesten Weg zurücklegt und zudem eine kompakte Bauweise ermöglicht wird.

In Ausgestaltung der Erfindung ist die Hydraulikpumpe eine Zahnradpumpe, vorzugsweise eine Außenzahnradpumpe. Die Zuführung der Hydraulikflüssigkeit vom Druckanschluss der Hydraulikpumpe zum Hydraulikzylinder erfolgt über eine Propeller-Regelhydraulik auf der Basis eines 3/2-Wegeventils.

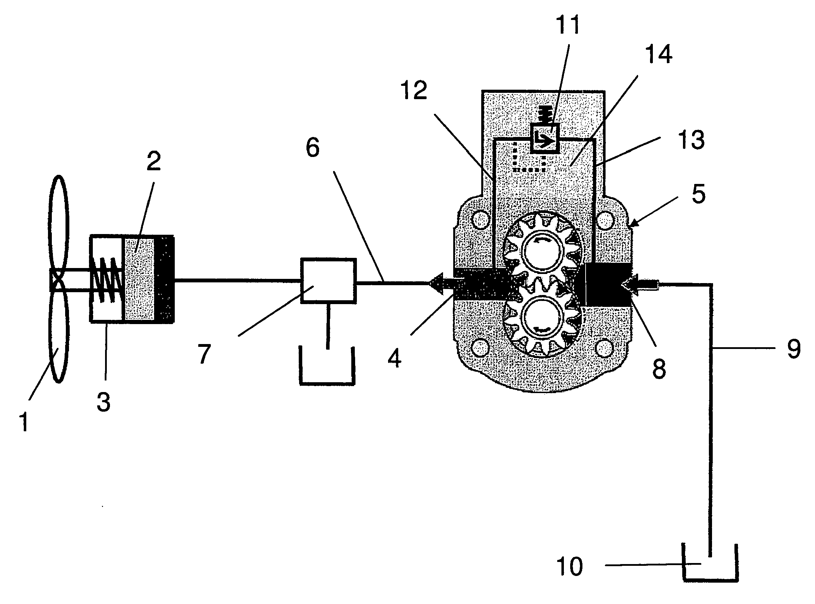

Ein Ausführungsbeispiel der Erfindung wird anhand der Zeichnung, in der schematisch eine Anordnung zur hydraulischen Verstellung der Propellerblätter eines Flugzeugs dargestellt ist, näher erläutert.

Wie in der Zeichnung schematisch angedeutet, wird die Blattsteigung eines Flugzeugpropellers 1 mit Hilfe eines einfachwirkenden, an einer Seite des Hydraulikkolbens 2 mit Hydrauliköl (Hydraulikflüssigkeit) beaufschlagten Hydraulikzylinders 3 verstellt. Die Zuführung des Hydrauliköls zum Hydraulikzylinder 3 erfolgt vom Druckanschluss 4 einer als Außenzahnradpumpe ausgebildeten Hydraulikpumpe 5 über eine Druckleitung 6 und eine in diese eingebundenen Propeller-Regelhydraulik 7. Der Sauganschluss 8 der Hydraulikpumpe 5 ist über eine Saugleitung 9 an ein Hydraulikflüssigkeitsreservoir 10, hier ein Ölbehälter bzw. ein Getriebegehäuse, angeschlossen. Die Hydraulikpumpe 5 erzeugt einen kontinuierlichen Volumenstrom des Hydrauliköls, das unter Druck zum Hydraulikzylinder 3 gelangt. Ein zur Begrenzung eines bestimmten maximalen, am Hydraulikzylinder 3 wirkenden Solldrucks erforderliches Druckbegrenzungsventil 11 ist parallel und in unmittelbarer Nähe zur Hydraulikpumpe 5 angeordnet und über eine kurze Hilfsdruckleitung 12 unmittelbar mit dem Druckanschluss 4 sowie eine kurze Rückführleitung 13 unmittelbar mit dem Sauganschluss 8 der Hydraulikpumpe 5 verbunden. In der vorliegenden Ausführungsform ist das Druckbegrenzungsventil 11 in das Pumpengehäuse 14 der Hydraulikpumpe 5 integriert, so dass das zur Druckbegrenzung abgezweigte Hydrauliköl nur sehr kurze Wege zurücklegen muss.

Durch die Rückführung des am Druckbegrenzungsventil 11 zur Druckbegrenzung anfallenden überschüssigen Öls auf kürzestem Weg unmittelbar zum Sauganschluss 8 werden gegenüber den bekannten Anordnungen zur hydraulischen Propellerverstellung, bei denen das abgezweigte Öl über eine lange Rücklaufleitung in das Getriebegehäuse 10 zurückfließt und somit auf einer langen Wegstrecke umgefördert werden muss, die Strömungsverluste und die damit verbundene Erwärmung des Hydrauliköls deutlich reduziert. Aufgrund der geringen Verluste und der nicht durch Erwärmung beeinträchtigten Ölqualität verringert sich die erforderliche Antriebsleistung der Hydraulikpumpe 5, so dass sich der Wirkungsgrad des hydraulischen Systems zur Propellerverstellung erhöht. Zudem ermöglicht die Einbindung des Druckbegrenzungsventils 11 in das Pumpengehäuse eine kompakte Bauweise.

### Bezugszeichenliste

- 1: Flugzeugpropeller
- 2: Hydraulikkolben
- 3: Hydraulikzylinder
- 4: Druckanschluss
- 5: Hydraulikpumpe, Zahnradpumpe
- 6: Druckleitung
- 7: Propeller-Regelhydraulik
- 8: Sauganschluss
- 9: Saugleitung
- 10: Hydraulikflüssigkeitsreservoir, Getriebegehäuse, Ölbehälter
- 11: Druckbegrenzungsventil
- 12: Hilfsdruckleitung
- 13: Rückführleitung
- 14: Pumpengehäuse

## Patentansprüche

1. Anordnung zum hydraulischen Verstellen der Propellerblätter eines Flugzeugpropellers (1) mit einem Hydraulikzylinder (3), der über ein Druckbegrenzungsventil (11) mit dem Druckanschluss (4) einer am Sauganschluss (8) an ein Hydraulikflüssigkeitsreservoir (10) angeschlossenen Hydraulikpumpe (5) verbunden ist, wobei das Druckbegrenzungsventil (11) parallel zur Hydraulikpumpe (5) zwischen dem Druck- und dem Sauganschluss (4, 8) angeordnet ist, **dadurch gekennzeichnet, dass** das Druckbegrenzungsventil (11) und dessen Verbindungsleitungen (12, 13) zum Druck- und Sauganschluss (4, 8) in das Pumpengehäuse (14) der Hydraulikpumpe (5) integriert sind.

2. Anordnung nach Anspruch 1, **dadurch gekennzeichnet, dass** das Hydraulikflüssigkeitsreservoir (10) von einem Getriebegehäuse gebildet ist oder ein Ölbehälter ist.

3. Anordnung nach Anspruch 1, **dadurch gekennzeichnet, dass** die Hydraulikpumpe (5) eine Zahnradpumpe ist.

4. Anordnung nach einem der Ansprüche 1 bis 3, **dadurch gekennzeichnet, dass** die Zuführung der Hydraulikflüssigkeit vom Druckanschluss der Hydraulikpumpe (5) zum Hydraulikzylinder (3) über eine Propeller-Regelhydraulik (7) auf der Basis eines 3/2-Wegeventils erfolgt.

## Claims

1. An arrangement for the hydraulic adjustment of the propeller blades of an aircraft propeller (1) by means of a hydraulic cylinder (3) which is connected by way of a pressure control valve (11) to the pressure connection (4) of a hydraulic pump (5) that on the suction connection (8) is connected to a hydraulic fluid reservoir (10), **characterised in that** the pressure control valve (11) is arranged parallel to the hydraulic pump (5) between the pressure and the suction connection (4, 8), wherein the pressure control valve (11) and its connection pipes (12, 13) with the pressure and suction connection (4, 8) are integrated in the pump casing (14) of the hydraulic pump (5).

2. The arrangement according to claim 1, **characterised in that** the hydraulic fluid reservoir (10) is formed by a transmission casing or is an oil container.

3. The arrangement according to claim 1, **characterised in that** the hydraulic pump (5) is a gear pump.

4. The arrangement according to any one of claims 1 to 3, **characterised in that** the supply of the hydraulic fluid from the pressure connection of the hydraulic pump (5) to the hydraulic cylinder (3) takes place by way of propeller control hydraulics (7) on the basis of a 3/2-way valve.

## Revendications

1. Un arrangement de réglage hydraulique des pales d`hélice d'un hélice aéronautique (1) ayant un cylindre hydraulique (3), lequel est connecté par une soupape de décharge (11) avec le raccord de pression (4) d'une pompe hydraulique (5) raccordée au raccord d'aspiration (8) à un réservoir pour un liquide hydraulique (10) **caractérisé en ce que** la soupape de décharge (11) est arrangée de manière parallèle à la pompe hydraulique (5) entre le raccord de pression et d'aspiration (4, 8), la soupape de décharge (11) et ses jonctions (12, 13) au raccord de pression et d'aspiration (4, 8) étant intégrées dans le boîtier pompe (14) de la pompe hydraulique (5).

2. L'arrangement selon la revendication 1, **caractérisé en ce que** le réservoir pour un liquide hydraulique (10) est formé d'un carter de boîte à vitesses ou est un récipient pour huile.

3. L'arrangement selon la revendication 1, **caractérisé en ce que** la pompe hydraulique (5) est une pompe à engrenages.

4. L'arrangement selon une des revendications là 3, **caractérisé en ce que** l'alimentation du liquide hydraulique du raccord de pression de la pompe hydraulique (5) au cylindre hydraulique (3) s'effectue par une hydraulique de commande d'hélice sur la base d'une valve à 3/2 voies.
